# EUROPÄISCHE PATENTSCHRIFT

(11) **EP 2 657 319 B1**
(45) Veröffentlichungstag und Bekanntmachung des Hinweises auf die Patenterteilung: **02.08.2017**
(21) Anmeldenummer: 12166027.8
(22) Anmeldetag: 27.04.2012
(51) Int. Cl.: C09K 21/04

(54) **ZUSAMMENSETZUNG BASIEREND AUF MAGNESIUMSULFAT UND DIAMMONIUMHYDROGENPHOSPHAT**
COMPOSITION BASED ON MAGNESIUM SULPHATE AND DIAMMONIUM HYDROGEN PHOSPHATE
COMPOSITION À BASE DE SULFATE DE MAGNÉSIUM ET DE DI-AMMONIUM HYDROGÉNOPHOSPHATE

(43) Veröffentlichungstag der Anmeldung: 30.10.2013
(73) Patentinhaber: K+S KALI GmbH, 34131 Kassel (DE)
(72) Erfinder: Weber, Ralf, 34260 Kaufungen (DE); Kleine-Kleffmann, Ulrich, 36251 Bad Hersfeld (DE)
(74) Vertreter: Reitstötter Kinzebach

(56) Entgegenhaltungen:
- WO-A1-96/00763
- DE-A1- 19 648 855
- GB-A- 1 171 475
- B.E.I. ABDELRAZIG ET AL: "The chemical composition of mortars made from magnesia-phosphate cement", CEMENT AND CONCRETE RESEARCH, Bd. 18, Nr. 3, 1. Mai 1988 (1988-05-01), Seiten 415-425, XP55038955, ISSN: 0008-8846, DOI: 10.1016/0008-8846(88)90075-0

## Beschreibung

Die vorliegende Erfindung betrifft Zusammensetzungen, die durch die Umsetzung eines Hydrats des Magnesiumsulfats mit Diammoniumhydrogenphosphat und einer weiteren anorganischen Substanz, insbesondere wasserfreies Magnesiumsulfat, erhältlich sind. Die Erfindung betrifft auch die Herstellung der Zusammensetzungen und deren Verwendung als Flammschutzmittel.

Zur Wärmedämmung von Neu- und Altbauten werden Dämmstoffe eingesetzt, die in vielen Fällen aus nachwachsenden oder recycelten organischen Fasermaterialien, wie Holzwolle, Holzschnitzel, Schafwolle oder Altpapier, hergestellt werden. Da solche Materialien oftmals vergleichsweise leicht entzündlich sind, wird ihnen bei der Verarbeitung zu Dämmstoffen in der Regel Flammschutzmittel zugesetzt. Als Flammschutzmittel finden bestimmte Salze und Salzgemische Anwendung, die üblicherweise in fein gemahlener Form mit den organischen Fasermaterialien vermischt werden. In diesem Zusammenhang haben sich Gemische von Boraten mit weiteren Salzen, wie insbesondere Bittersalz (MgSO₄ • 7 H₂O), bewährt, wobei Bittersalz vor allem durch seinen hohen Hydratanteil zur Flammhemmung beiträgt. Da in jüngster Zeit die toxikologische Unbedenklichkeit von Boraten und Borsäure zunehmend in Frage gestellt wird, besteht ein Bedarf an Alternativen hierzu.

Grundsätzlich ist bekannt, dass Ammoniumphosphate, wie zum Beispiel (NH₄)₃PO₄, (NH₄)₂HPO₄ und (NH₄)H₂PO₄, brandhemmende Wirkung haben. Eigene Versuche der Erfinder haben jedoch gezeigt, dass Borate nicht ohne Weiteres durch Ammoniumphosphate ersetzt werden können. So entstehen beim Vermahlen von Mischungen aus Bittersalz und Ammoniumphosphaten anstatt des gewünschten Pulvers gummiartige Massen, die zudem häufig mit dem Mahlwerk verkleben. Diese Mischungen haben demnach ungenügende Verarbeitungseigenschaften, die ihren Einsatz im großtechnischen Maßstab ausschließen.

In der US 4,374,171 wird neben einer Reihe weiterer flammhemmender Salze auch Magnesiumsulfat und Ammoniumhydrogenphosphat aufgelistet. Allerdings offenbart US 4,374,171 weder Mischungen dieser Salze noch daraus erhältliche Mischsalze. Insbesondere offenbart US 4,374,171 keine Zusammensetzungen, die sich aus der Umsetzung von einem Hydrat des Magnesiumsulfats mit Diammoniumhydrogenphosphat und wasserfreien Magnesiumsulfat ergeben.

GB 1,171,475 beschreibt ein Verfahren zur Flammenschutzausrüstung von Holz, wobei das Holz unter Druck im ersten Schritt mit einer wässrigen (NH₄)₂HPO₄-Lösung und im zweiten Schritt mit einer wässrigen MgSO₄-Lösung imprägniert wird.

WO 96/00763 beschreibt ein Verfahren zur Flammenschutzausrüstung von Holz, wobei ein organisches wasserabsorbierendes Material mit wässrigen Lösungen von Diammoniumhydrogensulfat und Magnesiumsulfat in Anwesenheit von Phosphorsäure und Essigsäure imprägniert wird.

Abdelrazig et al. beschreibt die Umsetzung von Magnesiumoxid mit Ammoniumdihydrogenphosphat, welches nicht durch Diammoniumhydrogenphosphat verunreinigt ist. Als Zwischenprodukt wird Schertelit ((NH₄)₂Mg(HPO₄)₂ · 4 H₂O) erhalten, das durch weitere Umsetzung mit Wasser und MgO zu Struvit (NH₄MgPO₄ · 2 H₂O) reagiert.

DE 196 48 855 befasst sich mit der Ausrüstung von Keratinfasern oder zellulosehaltigen Materialien zur Brandhemmung und zur Vorbeugung von Schimmel- und Insektenbefall.

Der Erfindung liegt daher die Aufgabe zu Grunde, eine aus Bittersalz erhältliche Zusammensetzung bereitzustellen, die kein Borat enthält, aber Flammschutz- und Verarbeitungseigenschaften aufweist, die denen von Gemischen aus Bittersalz und Borat vergleichbar sind.

Überraschenderweise wurde gefunden, dass sich durch Umsetzung von Magnesiumsulfat-Hydraten, wie etwa Bittersalz, mit Diammoniumhydrogenphosphat und wasserfreiem Magnesiumsulfat Zusammensetzungen herstellen lassen, die die gestellte Aufgabe lösen und insbesondere die geforderten Verarbeitungseigenschaften besitzen. Die so erhaltenen Zusammensetzungen lassen sich daher besonders gut in Dämmstoffe einarbeiten, vor allem in solche, die auf organischen Fasermaterialien basieren.

Gegenstand der Erfindung sind feste, partikuläre Zusammensetzungen, enthaltend 40 bis 80 Gew.-% einer Verbindung der Formel I

[(NH₄)₂Mg(HPO₄)₂ • m H₂O] (I),

oder ein Gemisch der Verbindung der Formel (I) mit einer Verbindung der Formel II

[(NH₄)₂Mg(SO₄)₂ • n H₂O] (II),

worin m im Bereich von 3 bis 5 und n im Bereich von 5 bis 7 liegen, sowie 20 bis 60 Gew.-% eines Hydrats des Magnesiumsulfats, jeweils bezogen auf das Gesamtgewicht der Zusammensetzung, die durch Umsetzung wenigstens eines Hydrats des Magnesiumsulfats mit Diammoniumhydrogenphosphat ((NH₄)₂HPO₄) und mit einem weiteren anorganischen Material bzw. einer weiteren anorganischen Substanz erhältlich sind, wobei das weitere anorganische Material bzw. die weitere anorganische Substanz unter wasserfreiem Magnesiumsulfat, wasserfreiem Calciumchlorid und deren Gemischen ausgewählt ist, wobei die Umsetzung Zusammengeben und inniges Vermischen der genannten Komponenten umfasst.

Die erfindungsgemäßen Zusammensetzungen sind feste, in der Regel kristalline oder zumindest überwiegend kristalline Zusammensetzungen. Sie weisen im Gegensatz zu Zusammensetzungen, die durch Umsetzung von Hydraten des Magnesiumsulfats mit Ammoniumphosphat, -hydrogenphosphat bzw. -dihydrogenphosphat erhältlich sind, vorteilhafte Verarbeitungseigenschaften auf und lassen sich insbesondere mit auf organischen Fasermaterialien basierenden Dämmstoffen problemlos zu Dämmmaterialien verarbeiten, die über einen guten Flammschutz verfügen. Zudem sind die erfindungsgemäßen Verbindungen durch einfache Verfahren leicht zugänglich und lassen sich in partikularer Form, etwa in Pulverform, herstellen.

Man nimmt an, dass die Eigenschaft des weiteren anorganischen Materials, Wasser zu binden, für die vorteilhaften Eigenschaften der erfindungsgemäßen Zusammensetzungen mit ursächlich sind.

Die durch die zuvor genannte Umsetzung erhältlichen Zusammensetzungen der vorliegenden Erfindung enthalten in der Regel eine Verbindung der Formel I

[(NH₄)₂Mg(HPO₄)₂ • m H₂O] (I),

oder ein Gemisch der Verbindung der Formel (I) mit einer Verbindung der Formel II

[(NH₄)₂Mg(SO₄)₂ • n H₂O] (II),

worin m üblicherweise im Bereich von 2 bis 6 und erfindungsgemäß im Bereich von 3 bis 5 liegt sowie n üblicherweise im Bereich von 4 bis 8 und erfindungsgemäß von 5 bis 7 liegt. In Formel I bedeutet m insbesondere 4, und in Formel II bedeutet n insbesondere 6.

Gemäß einer weiteren bevorzugten Ausführungsform enthalten die erfindungsgemäßen Verbindungen zusätzlich ein Hydrat des Magnesiumsulfats, das pro Mol MgSO₄ 1 bis 10, vorzugsweise 4 bis 8 und insbesondere 6 Äquivalente H₂O enthält.

Vorzugsweise enthält die Zusammensetzung 30 bis 100 Gew.-%, erfindungsgemäß 40 bis 80 Gew.-%, einer Verbindung der Formel I bzw. eines Gemisches von Verbindungen der Formeln I und II, sowie 0 bis 70 Gew.-%, erfindungsgemäß 20 bis 60 Gew.-%, von dem Hydrat des Magnesiumsulfats, jeweils bezogen auf das Gesamtgewicht der Zusammensetzung.

Eine bevorzugte Ausführungsform der Erfindung betrifft Zusammensetzungen, die durch Umsetzung wenigstens eines Hydrats des Magnesiumsulfats mit Diammoniumhydrogenphosphat ((NH₄)₂HPO₄) und mit wasserfreiem Magnesiumsulfat als weiterem anorganischen Material erhältlich sind.

Die erfindungsgemäßen Zusammensetzungen enthalten vorzugweise weniger als 20 Gew.-%, insbesondere weniger als 15 Gew.-% und speziell weniger als 10 Gew.-% an Verbindungen, die von den Verbindungen der Formeln I und II sowie dem Magnesiumsulfat-Hydrat verschieden sind, jeweils bezogen auf das Gesamtgewicht der Zusammensetzung.

Sofern die Zusammensetzungen durch Umsetzung wenigstens eines Hydrats des Magnesiumsulfats mit Diammoniumhydrogenphosphat ((NH₄)₂HPO₄) und mit einem weiteren anorganischen Material erhältlich ist, das unter wasserfreiem Calciumchlorid und deren Gemischen ausgewählt ist, kann der Anteil an Substanzen, die von den Verbindungen der Formeln I und II sowie dem Magnesiumsulfat-Hydrat verschieden sind, auch mehr als 20 Gew.-%, z. B. bis 50 Gew.-%, betragen und liegt dann vorzugsweise im Bereich von 5 bis 50 Gew.-%, insbesondere im Bereich von 10 bis 30 Gew.-%, jeweils bezogen auf das Gesamtgewicht der Zusammensetzung. Bei den Substanzen, die von den Verbindungen der Formeln I und II sowie dem Magnesiumsulfat-Hydrat verschieden sind, handelt es in diesem Fall sich vor allem um Zeolithe, wasserfreies Calciumchlorid und Hydrate des Calciumchlorids, z. B. Calciumchlorid-Hexahydrat.

Die Identität und der Anteil an Verbindungen der Formeln I und II, des Magnesiumsulfat-Hydrats und der meisten weiteren Verbindungen, die gegebenenfalls in den erfindungsgemäßen Zusammensetzungen vorliegen, kann mittels Röntgenpulverdiffraktometrie durch Vergleich eines Pulverdiffraktogramms mit entsprechenden Referenz-Pulverdiffraktogrammen ermittelt werden. Derartige Methoden sind dem Fachmann bekannt und können in an sich bekannter Weise, beispielsweise mit Hilfe der Pulverröntgen-Diffraktometrie Software: "EVA" Ver. 12.0.0.0 der Fa. Bruker AXS, Datenbank: Powder Diffraction Files (PDF-2, Release 1999; Data Sets 1-49, plus 70-86) des International Center for Diffraction Data (ICDD), durchgeführt werden.

Aus der Abwesenheit von Reflexen, die für die Ausgangsverbindungen, insbesondere Diammoniumhydrogenphosphat und wasserfreies Magnesiumsulfat bzw. wasserfreies Calciumchlorid, charakteristisch sind, kann zudem geschlossen werden, dass ihr jeweiliger Anteil gemäß qualitativer Auswertung der RDA Diagramme gering ist. Die charakteristischen Reflexe für MgSO₄ in Form des Anhydrats, Bittersalz und weiterer möglicher Edukte und Nebenprodukte können der Literatur oder einschlägigen Datenbanken wie denen des International Centre for Diffraction Data (JCPDS) entnommen werden.

Die in den erfindungsgemäßen Zusammensetzungen in der Regel enthaltene Verbindung der Formel I weist in einem bei 25 °C aufgenommenen Röntgenpulverdiffraktogramm (Cu-K_{α}-Strahlung: λ = 1.5413 Å) wenigstens 3 und insbesondere wenigstens 5 und speziell wenigstens 7 oder alle d-Werte der folgenden der Tabelle 1 auf, wobei sie vorzugsweise wenigstens 3, insbesondere wenigstens 5 und speziell wenigstens 7 der jeweiligen Reflexe aufweist, deren relative Intensität wenigstens 30 %, bezogen auf die Intensität des stärksten Peaks (100 % rel. Intensität) ist. Die gemessenen Intensitäten können von den angegebenen Werten in gewissem Umfang abweichen, da sie in an sich bekannter Weise von der Probenvorbereitung abhängen. In Tabelle 1 sind die charakteristischen Reflexe der Verbindung I als Netzbenennungsabstände d (in Ängström) angegeben, die sich mit der Bragg'schen Beziehung aus 20-Werten berechnen lassen.

**Tabelle 1**

| **d-Wert (Å)** | **rel. Intensität (%)** |
|---|---|
| 5,1910 ± 0,0005 | 100 |
| 5,9150 ± 0,0005 | 79 |
| 4,3100 ± 0,0005 | 51 |
| 3,4624 ± 0,0005 | 35 |
| 5,9572 ± 0,0005 | 34 |
| 3,0122 ± 0,0005 | 33 |
| 3,9016 ± 0,0005 | 32 |
| 2,5845 ± 0,0005 | 28 |
| 3,3563 ± 0,0005 | 21 |
| 3,5925 ± 0,0005 | 21 |
| 2,5757 ± 0,0005 | 20 |
| 5,7450 ± 0,0005 | 19 |

Entsprechend weist die in den erfindungsgemäßen Zusammensetzungen gegebenenfalls enthaltene Verbindung der Formel II in einem bei 25 °C aufgenommenen Röntgenpulverdiffraktogramm (Cu-K_{α}-Strahlung: λ = 1.5413 Ä) wenigstens 3 und insbesondere wenigstens 5 und speziell wenigstens 7 oder alle d-Werte der folgenden der Tabelle 2 auf, wobei sie vorzugsweise wenigstens 3, insbesondere wenigsten 5 und speziell wenigstens 7 der jeweiligen Reflexe aufweist, deren relative Intensität wenigstens 30 %, bezogen auf die Intensität des stärksten Peaks (100 % rel. Intensität) ist. Die gemessenen Intensitäten können von den angegebenen Werten in gewissem Umfang abweichen, da sie in an sich bekannter Weise von der Probenvorbereitung abhängen. In Tabelle 2 sind die charakteristischen Reflexe der Verbindung II als Netzbenennungsabstände d (in Ängström) angegeben, die sich mit der Bragg'schen Beziehung aus 20-Werten berechnen lassen.

**Tabelle 2**

| **d-Wert (Å)** | **rel. Intensität (%)** |
|---|---|
| 4,2054 ± 0,0005 | 100 |
| 3,8022 ± 0,0005 | 85 |
| 4,2633 ± 0,0005 | 58 |
| 5,3750 ± 0,0005 | 55 |
| 3,1510 ± 0,0005 | 54 |
| 3,0123 ± 0,0005 | 34 |
| 2,7834 ± 0,0005 | 34 |
| 4,1391 ± 0,0005 | 31 |
| 5,1510 ± 0,0005 | 30 |
| 4,3235 ± 0,0005 | 26 |
| 3,0529 ± 0,0005 | 23 |
| 2,4623 ± 0,0005 | 22 |

Die in den erfindungsgemäßen Zusammensetzungen eventuell enthaltenen weiteren Verbindungen können in einem bei 25 °C (Cu-K_{α}-Strahlung: λ = 1.5413 Ä) aufgenommenen Röntgenpulverdiffraktogramm einer erfindungsgemäßen Zusammensetzung, gegebenenfalls anhand der in der folgenden Tabelle 3 angegebene Reflexe, identifiziert werden, wobei zur Identifikation typischerweise wenigstens 3 der angegebenen d-Werte mit einer relativen Intensität von wenigstens 30 % herangezogen werden. Die gemessenen Intensitäten können von den angegebenen Werten in gewissem Umfang abweichen, da sie in an sich bekannter Weise von der Probenvorbereitung abhängen. Für Zeolithe können die entsprechenden Reflexe der folgenden Datenbank entnommen werden: Database of Zeolite Structures: http://izasc.ethz.ch/fmi/xsl/IZA-SC/xrd.xsl

**Tabelle 3**

| **Verunreinigung** | **d-Wert (Å)** | **rel. Intensität (%)** |
|---|---|---|
| (NH₄)₂SO₄ | 4,3208 ± 0,0005 | 100 |
| | 4,3766 ± 0,0005 | 53 |
| | 3,0407 ± 0,0005 | 47 |
| | 3,8800 ± 0,0005 | 30 |
| | 2,9850 ± 0,0005 | 26 |
| NH₄H₂PO₄ | 5,3243 ± 0,0005 | 100 |
| | 3,0673 ± 0,0005 | 90 |
| | 3,0779 ± 0,0005 | 85 |
| | 3,7507 ± 0,0005 | 55 |
| | 2,0091 ± 0,0005 | 40 |
| MgSO₄ • 6 H₂O | 3,4050 ± 0,0005 | 100 |
| | 4,8150 ± 0,0005 | 75 |
| | 3,3510 ± 0,0005 | 70 |
| | 3,3130 ± 0,0005 | 70 |
| MgSO₄ | 3,5300 ± 0,0005 | 100 |
| | 3,6100 ± 0,0005 | 70 |
| | 4,1500 ± 0,0005 | 30 |
| MgHPO₄ • 3 H₂O | 3,0407 ± 0,0005 | 100 |
| | 3,4616 ± 0,0005 | 66 |
| | 3,0858 ± 0,0005 | 54 |
| | 5,9452 ± 0,0005 | 52 |
| | 4,7141 ± 0,0005 | 47 |
| CaCl₂ • 6 H₂O | 3,9380 | 100 |
| | 2,1596 | 93 |
| | 6,8207 | 82 |
| | 3,4211 | 75 |
| | 2,7904 | 74 |
| | 2,5826 | 67 |
| | 2,2736 | 62 |
| | 2,5780 | 46 |
| | 1,7065 | 24 |
| | 1,4884 | 19 |
| | 1,9773 | 17 |
| | 1,9689 | 16 |
| | 1,9690 | 16 |
| | 1,4920 | 12 |
| | 1,8991 | 11 |
| | 1,4550 | 10 |
| | 1,5658 | 7 |
| | 1,5658 | 7 |
| | 1,5689 | 6 |
| | 1,7670 | 6 |
| | 1,7106 | 5 |
| | 1,2255 | 5 |
| | 1,1891 | 5 |
| | 1,3930 | 5 |
| CaCl₂ | 3,0634 ± 0,0005 | 100 |
| | 4,4780 ± 0,0005 | 85 |
| | 2,3337 ± 0,0005 | 52 |
| | 2,8579 ± 0,0005 | 32 |
| | 1,9091 ± 0,0005 | 29 |
| | 2,2390 ± 0,0005 | 28 |
| | 2,3628 ± 0,0005 | 25 |
| | 2,1000 ± 0,0005 | 21 |
| | 3,4843 ± 0,0005 | 17 |
| | 1,9013 ± 0,0005 | 13 |
| | 1,5317 ± 0,0005 | 12 |
| | 1,8640 ± 0,0005 | 12 |
| | 1,7902 ± 0,0005 | 11 |
| | 1,6923 ± 0,0005 | 8 |
| | 1,2528 ± 0,0005 | 7 |
| | 1,5567 ± 0,0005 | 6 |
| | 1,2080 ± 0,0005 | 6 |
| | 3,1200 ± 0,0005 | 5 |
| | 1,5600 ± 0,0005 | 5 |
| | 1,2506 ± 0,0005 | 5 |

Bevorzugte Zusammensetzungen der Erfindung weisen ein Molverhältnis von Phosphor zu Schwefel auf ,das in der Regel im Bereich von 2:1 bis 1:5, vorzugsweise im Bereich von 1,5:1 bis 1:4 und insbesondere im Bereich von 1:1 bis 1:3 liegt. Das Molverhältnis von Phosphor zu Schwefel der Zusammensetzungen lässt sich beispielsweise durch Elementaranalyse bestimmen.

Bevorzugte Zusammensetzungen der Erfindung weisen ein Molverhältnis von Phosphor zu Magnesium auf, das in der Regel im Bereich von 2:1 bis 1:5, vorzugsweise im Bereich von 1,5:1 bis 1:4 und insbesondere im Bereich von 1:1 bis 1:3 liegt. Das Molverhältnis von Phosphor zu Magnesium der Zusammensetzungen lässt sich beispielsweise durch Elementaranalyse bestimmen.

Des Weiteren sind solche Zusammensetzungen der Erfindung bevorzugt, die einen Wassergehalt von 5 bis 50 Gew.-%, insbesondere 10 bis 40 Gew.-% und speziell von 10 bis 30 Gew.-%, bezogen auf das Gesamtgewicht der Zusammensetzung, aufweisen. Der Wassergehalt der Zusammensetzungen lässt sich beispielsweise durch Karl-Fischer-Titration ermitteln.

Die erfindungsgemäßen Zusammensetzungen haben vorzugsweise einen Phosphorgehalt, gerechnet als Phosphat, von 10 bis 40 Gew.-%, insbesondere von 15 to 35 Gew.-% und speziell von 15 bis 30 Gew.-%, bezogen auf das Gesamtgewicht der Zusammensetzung.

Es wurde weiterhin ein Verfahren zur Herstellung der erfindungsgemäßen Zusammensetzungen gefunden, das dadurch gekennzeichnet ist, dass man wenigstens ein Hydrat des Magnesiumsulfats, wie etwa Bittersalz, mit Diammoniumhydrogenphosphat ((NH₄)₂HPO₄) zusammen mit einem weiteren anorganischen Material umsetzt, das unter wasserfreiem Calciumchlorid und wasserfreiem Magnesiumsulfat und deren Gemischen ausgewählt ist und wobei die Umsetzung Zusammengeben und inniges Vermischen der genannten Komponenten umfasst.

Vorzugsweise setzt man zur Herstellung des erfindungsgemäßen Materials das weitere anorganische Material in solchen Mengen ein, dass der Gewichtsanteil des weiteren anorganischen Materials, jeweils bezogen auf die Gesamtmenge an Hydrat des Magnesiumsulfats Diammoniumhydrogenphosphat und weiteres anorganisches Material in der Reaktionsmischung, im Bereich von 5 bis 50 Gew.-%, insbesondere im Bereich von 10 bis 30 Gew.-% liegt.

Vorzugsweise setzt man das Hydrat des Magnesiumsulfats in solchen Mengen ein, dass der Wassergehalt, jeweils bezogen auf die Gesamtmenge an Hydrat des Magnesiumsulfats Diammoniumhydrogenphosphat und weiteres anorganisches Material in der Reaktionsmischung, im Bereich von 5 bis 50 Gew.-%, insbesondere 10 bis 40 Gew.-% und speziell von 10 bis 30 Gew.-% liegt.

Vorzugsweise setzt man das Hydrat des Magnesiumsulfats und (NH₄)₂HPO₄ in einem solchen Mengenverhältnis ein, so dass in der nach der Umsetzung erhaltenen Zusammensetzung das Molverhältnis von Phosphor zu Schwefel in der Regel im Bereich von 2:1 bis 1:5, vorzugsweise im Bereich von 1,5:1 bis 1:4 und insbesondere im Bereich von 1:1 bis 1:3 liegt.

In einer bevorzugten Ausführungsform der Erfindung setzt man als weitere anorganische Substanz wasserfreies Magnesiumsulfat ein, d. h. in dem erfindungsgemäßen Verfahren werden das Hydrat des Magnesiumsulfats, wasserfreies Magnesiumsulfat und (NH₄)₂HPO₄ miteinander umgesetzt.

In dieser bevorzugten Ausführungsform des erfindungsgemäßen Verfahrens setzt man vorzugsweise das Hydrat des Magnesiumsulfats, wasserfreies Magnesiumsulfat und (NH₄)₂HPO₄ in einem solchen Mengenverhältnis ein, so dass in der nach der Umsetzung erhaltenen Zusammensetzung das Molverhältnis von Phosphor zu Schwefel in der Regel im Bereich von 2:1 bis 1:5, vorzugsweise im Bereich von 1,5:1 bis 1:4 und insbesondere im Bereich von 1:1 bis 1:3 liegt.

In dieser bevorzugten Ausführungsform des erfindungsgemäßen Verfahrens setzt man vorzugsweise das Hydrat des Magnesiumsulfats und wasserfreies Magnesiumsulfat in einem Molverhältnis im Bereich von 1:4 bis 4:1, vorzugsweise von 1:3 bis 3:1 und speziell von 1:2,5 bis 2:1 ein.

In einer weiteren Ausführungsform der Erfindung setzt man als weitere anorganische Substanz wasserfreies Calciumchlorid ein, d. h. in dem erfindungsgemäßen Verfahren werden das Hydrat des Magnesiumsulfats, wasserfreies Calciumchlorid und (NH₄)₂HPO₄ miteinander umgesetzt.

In einer weiteren Ausführungsform setzt man als weitere anorganische Substanz wenigstens einen Zeolithen ein, d. h. in dem erfindungsgemäßen Verfahren werden das Hydrat des Magnesiumsulfats, wenigstens ein Zeolith und (NH₄)₂HPO₄ miteinander umgesetzt. Bevorzugt handelt es sich bei dem Zeolithen um einen zumindest teilweise entwässerten Zeolithen, d. h. der Zeolith enthält typischerweise nicht mehr als 50 % der Menge an Wasser, die er zu binden vermag. Insbesondere setzt man einen weitgehend oder vollständig entwässerten Zeolithen ein, d. h. der Zeolith enthält typischerweise nicht mehr als 10 % der Menge an Wasser, die er zu binden vermag. Geeignete Zeolithe sind dem Fachmann bekannt. Geeignet sind sowohl natürliche als auch künstliche Zeolithe, insbesondere solche Zeolithe, die als Molekularsiebe geeignet sind und Wasser binden können. Beispiele für geeignete künstliche Zeolithe sind die Zeolithe vom Typ Zeolith A, Zeolith X, Zeolith Y, Zeolith L, ZSM5 und ZSM11. Beispiele für geeignete natürliche Zeolithe sind die wenigstens teilweise entwässerten Formen der Faujasite, des Mordenit und der Stilbite.

Gemäß einer Gruppe bevorzugter Ausführungsformen des erfindungsgemäßen Verfahrens wird als Hydrat des Magnesiumsulfats Bittersalz (MgSO₄ • 7 H₂O) eingesetzt.

Insbesondere wird man zur Umsetzung nach dem erfindungsgemäßen Verfahren ein Gemisch aus einem Hydrat des Magnesiumsulfats, dem weiteren anorganischen Bestandteil, insbesondere wasserfreies Magnesiumsulfat, und (NH₄)₂HPO₄ im oben genannten Mengenverhältnis zusammengeben und innig miteinander vermischen, beispielsweise mittels Extruder, oder mittels geeigneter Rühr-, Knet- oder Zerkleinerungsvorrichtungen. Vorzugsweise erfolgt das Vermischen durch Vermahlen mittels geeigneter Vorrichtungen, wie insbesondere Schlag- oder Prallmühlen, unter anderem auch Backenbrecher, Rundbrecher, Walzenbrecher, Hammerbrecher, Daumenbrecher, Schneckenbrecher, Wälzmühlen, Schlag- und Schleudermühlen.

Die Umsetzung nach dem erfindungsgemäßen Verfahren ist exotherm. Hierbei hat es sich als vorteilhaft erwiesen, die Umsetzung der Reaktionspartner Magnesiumsulfat-Hydrat, Diammoniumhydrogenphosphat und dem weiteren anorganischen Bestandteil in dem Verfahren unter Ausnutzung der Reaktionswärme durchzuführen. Vorzugsweise wird man dabei eine Temperatur von 70 °C nicht überschreiten. Gegebenenfalls wird man daher das Reaktionsgemisch kühlen. Insbesondere erfolgt die Umsetzung bei Temperaturen im Bereich von 10 bis 70 °C.

Nach Beendigung der Reaktion lässt man die entstandene Zusammensetzung in der Regel auf Umgebungstemperatur abkühlen. Hierbei erhält man typischerweise eine feste, kristalline, oder zumindest überwiegend kristalline Masse, die, zumindest falls das Vermischen durch Vermahlen erfolgte, in partikulärer Form vorliegt. In der Regel werden dann mindestens 90 Gew.-% der Partikel einen Durchmesser haben, der kleiner als 2 mm und vorzugsweise kleiner als 1 mm ist. Beispielsweise können mindestens 90 Gew.-% der Partikel einen Teilchendurchmesser im Bereich von 0,01 bis 2 mm und speziell von 0,1 bis 1 mm aufweisen. Der Teilchendurchmesser kann durch Siebanalyse bestimmt werden.

Das Verfahren der Erfindung ermöglicht es, die erfindungsgemäßen Zusammensetzungen in der zuvor beschriebenen Qualität und mit den zuvor geschriebenen Spezifikationen herzustellen. Das Verfahren ermöglicht es zudem, erfindungsgemäße Zusammensetzungen herzustellen, die eine Verbindung der Formel I oder ein Gemisch von Verbindungen der Formeln I und II enthalten und gegebenenfalls zusätzlich ein oder mehrere Hydrate des Magnesiumsulfats umfassen. Insbesondere können mit dem Verfahren die Verbindung I und gegebenenfalls die Verbindung II in hoher Ausbeute, in der Regel praktisch zu 100 %, bezogen auf die Edukte Magnesiumsulfat-Hydrat, (NH₄)₂HPO₄ und Magnesiumsulfat-Anhydrat, hergestellt werden.

Vorzugsweise enthalten die mit dem erfindungsgemäßen Verfahren hergestellten Zusammensetzungen 30 bis 100 Gew.-%, vorzugsweise 40 bis 80 Gew.-% einer Verbindung der Formel I bzw. eines Gemisches von Verbindungen der Formeln I und II, sowie 0 bis 70 Gew.-%, vorzugsweise 20 bis 60 Gew.-%, eines Hydrats des Magnesiumsulfats, jeweils bezogen auf das Gesamtgewicht der Zusammensetzung. Zudem besitzen die mit dem erfindungsgemäßen Verfahren hergestellten Zusammensetzungen der Erfindung die zuvor genannten guten Verarbeitungseigenschaften.

Die Erfindung betrifft weiterhin die Verwendung der erfindungsgemäßen Zusammensetzungen als Flammschutzmittel in unterschiedlichen Anwendungsgebieten. Die Zusammensetzungen sind insbesondere als Flammschutzmittel in Dämmmaterialien geeignet, speziell solchen, die auf organischen Fasermaterialien basieren, wie beispielsweise aus Altpapier gewonnenen Zellstofffasern, Holzfasern sowie Schafswolle.

Entsprechend betrifft die Erfindung auch Dämmmaterialen auf Basis von organischen Fasermaterialien, die mit einer als Flammschutzmittel fungierenden Zusammensetzung der Erfindung behandelt worden sind. Die Behandlung erfolgt in der Regel durch Vermischen der Fasermaterialien mit einer erfindungsgemäßen Zusammensetzung beispielsweise in einer Mischtrommel oder einer Schredderanlage.

Ein auf diese Weise zugängliches erfindungsgemäßes Dämmmaterial enthält eine Zusammensetzung der Erfindung üblicherweise in einer Menge von 2 bis 25 Gew.-%, insbesondere von 5 bis 20 Gew.-% und speziell von 7 bis 15 Gew.-%, bezogen auf das Gewicht des Dämmaterials.

Die erfindungsgemäße Zusammensetzung und das erfindungsgemäße Verfahren werden durch die nachfolgenden Beispiele näher erläutert.

### Allgemeine Vorschrift für Beispiele 1 bis 10:

Für die Beispiele 1 bis 10 wurden jeweils Bittersalz (technische Qualität), wasserfreies Magnesiumsulfat, und ein Ammoniumphosphat-Salz, bei dem es sich um NH₄)H₂PO₄, einem Gemisch aus (NH₄)H₂PO₄ und (NH₄)₂HPO₄ oder (NH₄)₂HPO₄ handelt, in den in Tabelle 4 angegebenen Mengen gemischt. Die Mischungen, deren Gesamtgewicht jeweils 50 g betrug, wurden jeweils 60 Sekunden in einer IKA Universalmühle Typ M20 (Motorleistung 260 Watt) bei etwa 20000 Umdrehungen pro Minute gemahlen. Die Temperatur des Gemisches wurde vor und direkt nach dem Mahlvorgang gemessen und ist für jedes Beispiel in Tabelle 4 angegeben. Ebenso sind die pH-Werte von 5 Gew.-%igen wässrigen Suspensionen der nach dem Mahlen jeweils erhaltenen Zusammensetzungen in Tabelle 4 gelistet.

**Tabelle 4:**

| Beisp iel | Bitter salz | MgSO₄^{a)} | AP-Salz 1^{b)} | AP-Salz 2^{b)} | AP-Salz 3^{b)} | Temperatur^{c)} | | pH-Wert ^{d)} |
|---|---|---|---|---|---|---|---|---|
| | | | | | | [°C] | | |
| | [g] | [g] | [g] | [g] | [g] | Anfang | Ende | |
| 1 | 25,00 | 8,33 | 16,67 | | | 22 | 51 | 4,8 (23°C) |
| 2 | 21,43 | 14,29 | 14,29 | | | 25 | 53 | 4,9 (24°C) |
| 3 | 18,75 | 18,75 | 12,50 | | | 24 | 62 | 4,8 (25°C) |
| 4 | 25,00 | 8,33 | | 16,67 | | 24 | 40 | 5,4 (24°C) |
| 5 | 21,43 | 14,29 | | 14,29 | | 24 | 45 | 5,5 (23°C) |
| 6 | 18,75 | 18,75 | | 12,50 | | 24 | 55 | 5,6 (23°C) |
| 7 | 25,00 | 8,33 | | | 16,67 | 25 | 54 | 4,8 (23°C) |
| 8 | 21,43 | 14,29 | | | 14,29 | 24 | 60 | 4,8 (23°C) |
| 9 | 18,75 | 18,75 | | | 12,50 | 24 | 62 | 4,8 (23°C) |
| 10 | 30,00 | 0 | | | 20,00 | 23 | 52 | 4,8 (23°C) |

| | | | | | | | | |
|---|---|---|---|---|---|---|---|---|
| ^{a)} wasserfreies Magnesiumsulfat; ^{b)} Ammoniumphosphat-Salz 1 (AP-Salz 1) = Ammoniumdihydrogenphosphat ((NH₄)H₂PO₄); AP-Salz 2 = Gemisch aus Ammoniumdihydrogenphosphat und Diammoniumhydrogenphosphat ((NH₄)H₂PO₄ / (NH₄)₂HPO₄); AP-Salz 3 = Diammoniumhydrogenphosphat ((NH₄)₂HPO₄); ^{c)} Temperaturen der Reaktionsmischung vor und direkt nach dem Mahlvorgang; ^{d)} pH-Werte der 5 Gew.-%igen wässrigen Suspension der nach der Umsetzung erhaltenen Zusammensetzung. | | | | | | | | |

### Beobachtungen:

- Beispiel 1:: Das Mahlgut hing zum Großteil zäh und plastisch an Mahlwand und Rotor; es hatte sich kein Pulver gebildet; während des Mahlens lief die Mühle zwischen Sekunden 40 und 45 schwergängig.
- Beispiel 2:: Ähnlich wie Beispiel 1, jedoch noch etwas zähere Anbackungen.
- Beispiel 3:: Ähnlich wie Beispiel 2, jedoch noch zähere Masse, die kaum noch aus der Mahlkammer ablösbar war.
- Beispiel 4:: Ähnlich wie Beispiel 1, jedoch etwas weniger zäh; während des Mahlens lief die Mühle zwischen Sekunden 15 und 20 schwergängig.
- Beispiel 5: Ähnlich wie Beispiel 3; die Mühle lief zwischen Sekunden 20 und 25 schwergängig.
- Beispiel 6:: Das Mahlgut war in der Mühle angebackt und nur schwer ablösbar; die Mühle lief zwischen Sekunden 20 und 25 schwergängig.
- Beispiel 7:: Das Mahlgut war überwiegend fein und pulvrig. An der Mahlwand befand sich eine dünne, anhaftende Schicht, die sich nicht leicht ablösen lässt; beim Öffnen der Mühle leichte Staubfahne beobachtet; während des Mahlvorgangs war kein Leistungsabfall wahrnehmbar.
- Beispiel 8:: Ähnlich wie Beispiel 7: Die dünne Schicht an der Mahlwand haftete nicht fest an.
- Beispiel 9:: Ähnlich wie Beispiel 8; nur im oberen Bereich der Mühle haftete eine dünne Schicht an der Mahlwand, welche sich leicht entfernen ließ.
- Beispiel 10:: Ein großer Teil des Mahlguts hing im oberen Bereich der Mahlkammer, wirkte klamm und ließ sich leicht ablösen. Ein weiterer Teil haftete als feste Schicht in der unteren Mahlkammer und war schwer ablösbar. Während des Mahlvorgangs wurde kein Leistungsabfall beobachtet.

### Phasenanalyse mittels Röntgendiffraktometrie (RDA):

Die Aufnahme der Röntgenpulverdiffraktogramme erfolgte mit einem Typ D 8 Advance Diffraktometer der Fa. Bruker, AXS (298 K, Cu-Kα-Strahlung: λ = 1.5413 Å), Schrittweite: 0,018385738, Schrittdauer: 0,2 Sekunden, Detektor: Lynx Eye. Die Phasenanalysen der in den Beispielen 1 bis 10 erhaltenen Zusammensetzungen sind in Tabelle 5 zusammengefasst. Die Zuordnung der Phasen gemäß höchster Wahrscheinlichkeit erfolgte mittels Vergleichsmaterial anhand des Powder Diffractions Files (PDF-2, Release 1999, Data Sets 1-49, plus 70-86) des International Center for Diffraction Data (ICDD). Die Nachweisgrenze lag je nach Phase zwischen 0,1 und 5%.

**Tabelle 5: Phasenzuordnungen der hergestellten Zusammensetzungen ¹⁾**

| | Beispiel | | | | | | | | | |
|---|---|---|---|---|---|---|---|---|---|---|
| | 1 | 2 | 3 | 4 | 5 | 6 | 7 | 8 | 9 | 10 |
| (NH₄)₂Mg(HPO₄)₂ • 4 H₂O | | | | | | | ++ | ++ | ++ | ++ |
| (NH₄)₂Mg(SO₄)₂ • 6 H₂O | ++ | ++ | ++ | ++ | ++ | ++ | ++ | ++ | ++ | ++ |
| (NH₄)₂SO₄ | | | | | | | (++) | (++) | (++) | (++) |
| MgSO₄ • 6 H₂O | ++ | ++ | ++ | + | + | + | ++ | ++ | ++ | - |
| MgSO₄ | ++ | ++ | ++ | (+) | ++ | ++ | (+) | ++ | ++ | - |
| MgHPO₄ • 6 H₂O | | | | | | | | | | |
| MgHPO₄ • 3 H₂O | (+) | (+) | (+) | (+) | (+) | (+) | | | | |
| NH₄H₂PO₄ | (+) | (+) | (+) | (+) | (+) | (+) | (+) | (+) | (+) | (+) |
| (NH₄)₂HPO₄ | | | | - | (+) | (+) | | | | |

| | | | | | | | | | | |
|---|---|---|---|---|---|---|---|---|---|---|
| ¹⁾ : ++ Phase deutlich vorhanden; (++) Phase wahrscheinlich deutlich vorhanden, aufgrund von Überlagerungen konnte aber keine definitive Zuordnung vorgenommen werden; + Phase vorhanden als Nebenbestandteil bzw. als Spur; (+) Phase wahrscheinlich als Nebenbestandteil bzw. als Spur vorhanden, aufgrund von Überlagerungen konnte aber keine definitive Zuordnung vorgenommen werden; - Phase nicht nachgewiesen bzw. unter der Nachweisgrenze. | | | | | | | | | | |

Wie aus Tabelle 4 ersichtlich, handelt es sich nur bei den in Beispielen 4 bis 9 erhaltenen Produkte um erfindungsgemäße Zusammensetzungen, da in Beispielen 1 bis 3 nur (NH₄)H₂PO₄ aber kein (NH₄)₂HPO₄ eingesetzt wurde und in Beispiel 10 kein wasserfreies MgSO₄ verwendet wurde. Wie in den oben in den "Beobachtungen" beschriebenen, haben die Zusammensetzungen der Beispiele 7 bis 9 gegenüber allen anderen deutlich verbesserte Verarbeitungseigenschaften.

## Patentansprüche

1. Feste, partikuläre Zusammensetzung, enthaltend 40 bis 80 Gew.-%, einer Verbindung der Formel I
[(NH₄)₂Mg(HPO₄)₂ • m H₂O] (I),
oder einen Gemischs der Verbindung der Formel (I) mit einer Verbindung der Formel II
[(NH₄)₂Mg(SO₄)₂ • n H₂O] (II),
worin m im Bereich von 3 bis 5 und n im Bereich von 5 bis 7 liegen, sowie 20 bis 60 Gew.-%, eines Hydrats des Magnesiumsulfats, jeweils bezogen auf das Gesamtgewicht der Zusammensetzung,
erhältlich durch Umsetzung wenigstens eines Hydrats des Magnesiumsulfats mit Diammoniumhydrogenphosphat ((NH₄)₂HPO₄) und mit einem weiteren anorganischen Material, das unter wasserfreiem Calciumchlorid und wasserfreiem Magnesiumsulfat und deren Gemischen ausgewählt ist, wobei die Umsetzung Zusammengeben und inniges Vermischen der genannten Komponenten umfasst.

2. Feste, partikuläre Zusammensetzung nach Anspruch 1, wobei das weitere anorganische Material wasserfreies Magnesiumsulfat ist.

3. Feste, partikuläre Zusammensetzung nach Anspruch 1 oder 2, enthaltend eine Verbindung der Formel I
[(NH₄)₂Mg(HPO₄)₂ • m H₂O] (I),
oder ein Gemisch der Verbindung der Formel (I) mit einer Verbindung der Formel II
[(NH₄)₂Mg(SO₄)₂ • n H₂O] (II),
worin m im Bereich worin m 4 bedeutet und n 6 bedeutet.

4. Feste, partikuläre Zusammensetzung nach einem der vorhergehenden Ansprüche, worin das Hydrat des Magnesiumsulfats 1 bis 10 Mol H₂O pro Mol MgSO₄ enthält.

5. Feste, partikuläre Zusammensetzung nach einem der vorhergehenden Ansprüche, worin das Molverhältnis von Phosphor zu Schwefel im Bereich von 1,5:1 bis 1:4 und insbesondere im Bereich von 1:1 bis 1:3 liegt.

6. Feste, partikuläre Zusammensetzung nach einem der vorhergehenden Ansprüche, die einen Wassergehalt von 10 bis 40 Gew.-%, bezogen auf das Gesamtgewicht der Zusammensetzung, aufweist.

7. Feste, partikuläre Zusammensetzung nach einen der vorhergehenden Ansprüche, die einen Phosphorgehalt, gerechnet als Phosphat, von 15 bis 30 Gew.-%, bezogen auf das Gesamtgewicht der Zusammensetzung, aufweist.

8. Verfahren zur Herstellung einer festen, partikulären Zusammensetzung nach einem der vorhergehenden Ansprüche, **dadurch gekennzeichnet, dass** man wenigstens ein Hydrat des Magnesiumsulfats mit Diammoniumhydrogenphosphat ((NH₄)₂HPO₄) zusammen mit einem weiteren anorganischen Material umsetzt, das unter wasserfreiem Calciumchlorid und wasserfreiem Magnesiumsulfat und deren Gemischen ausgewählt ist und wobei die Umsetzung Zusammengeben und inniges Vermischen der genannten Komponenten umfasst.

9. Verfahren nach Anspruch 8, **dadurch gekennzeichnet, dass** das weitere anorganische Material wasserfreies Magnesiumsulfat ist.

10. Verfahren nach Anspruch 9, **dadurch gekennzeichnet, dass** man das Hydrat des Magnesiumsulfats, wasserfreies Magnesiumsulfat und Diammoniumhydrogenphosphat ((NH₄)₂HPO₄) in einem solchen Mengenverhältnis einsetzt, dass das Molverhältnis von Phosphor zu Schwefel im Bereich von 1.5:1 bis 1:4 und insbesondere im Bereich von 1:1 bis 1:3 liegt.

11. Verfahren nach Anspruch 9 oder 10, **dadurch gekennzeichnet, dass** man das Hydrat des Magnesiumsulfats und wasserfreies Magnesiumsulfat in einem Molverhältnis im Bereich von 1:3 bis 3:1 einsetzt.

12. Verfahren nach einem der Ansprüche 8 bis 11, **dadurch gekennzeichnet, dass** man ein Gemisch aus Magnesiumsulfat, Diammoniumhydrogenphosphat und dem weiteren anorganischen Material vermahlt.

13. Verfahren nach einem der Ansprüche 8 bis 12, **dadurch gekennzeichnet, dass** man als Hydrat des Magnesiumsulfats Bittersalz einsetzt.

14. Verwendung einer festen, partikulären Zusammensetzung nach einem der Ansprüche 1 bis 7 als Flammschutzmittel, insbesondere in Dämmmaterialien auf Basis von organischen Fasermaterialien, speziell in Dämmmaterialien aus Altpapier, Holzfasern oder Schafswolle.

15. Dämmmaterial auf Basis von organischen Fasermaterialien, enthaltend eine feste, partikuläre Zusammensetzung nach einem der Ansprüche 1 bis 7, vorzugsweise ein einer Menge von 5 bis 20 Gew.-%, bezogen auf das Dämmmaterial.

## Claims

1. Solid particle composition comprising 40 to 80 wt. % of a compound of Formula I
[(NH₄)₂Mg(HPO₄)₂ • m H₂O] (I),
or of a mixture of the compound of Formula (I) with a compound of Formu-la II
[(NH₄)₂Mg(SO₄)₂ • n H₂O] (II),
where m is in the range of 3 to 5 und n is in the range of 5 bis 7, and 20 to 60 wt. % of a hydrate of the magnesium sulfate based on the total weight of the composition, obtainable by conversion of at least one hydrate of the magnesium sulfate with di-ammonium hydrogen phosphate ((NH₄)₂HPO₄) and with a further inorganic material which is selected from anhydrous calcium chloride and anhydrous magnesium sulfate and their mixtures, where the conversion comprises combining and mixing well with each other of the said compounds.

2. Solid particle composition according to claim 1, where the further inorganic material is anhydrous magnesium sulfate.

3. Solid particle composition according to claim 1 or 2 including a compound of Formula I
[(NH₄)₂Mg(HPO₄)₂ • m H₂O] (I),
or a mixture of the compound of Formula (I) with a compound of Formula II
[(NH₄)₂Mg(SO₄)₂ • n H₂O] (II),
where m is 4 and n is 6.

4. Solid particle composition according to anyone of the preceding claims, where the hydrate of the magnesium sulfate contains per mol MgSO₄ 1 bis 10 equivalents H₂O.

5. Solid particle composition according to anyone of the preceding claims, where the molar ratio of phosphorus to sulfur is in the range of 1.5:1 to 1:4, and in particular in the range 1:1 to 1:3.

6. Solid particle composition according to anyone of the preceding claims, which has a water content of 10 to 40 wt. %, based on the total weight of the composition.

7. Solid particle composition according to anyone of the preceding claims, which has a phosphorus content calculated as phosphate, of 15 to 30 wt. % based on the total weight of the composition.

8. A process for the manufacture of a solid particle composition according to anyone of the preceding claims, **characterized in that** at least one hydrate of the magnesium sulfate is reacted with di-ammoniumhydrogen phosphate ((NH₄)₂HPO₄) together with a further inorganic material which is selected from anhydrous calcium chloride and anhydrous magnesium sulfate and their mixtures, and where the conversion comprises combing and mixing well with each other of the said compounds.

9. The process according to claim 8, **characterized in that** the further inorganic material is anhydrous magnesium sulfate.

10. The process according to claim 9, **characterized in that** the hydrate of the magnesium sulfate, anhydrous magnesium sulfate and di-ammonium hydrogen phosphate ((NH₄)₂HPO₄) is used in such a ratio that the molar ratio of phosphorus to sulfur is in the range of 1.5:1 to 1:4, and in particular in the range of 1:1 to 1:3.

11. The process according to claim 9 or 10, **characterized in that** the hydrate of the magnesium sulfate and anhydrous magnesium sulfate is used in a molar ratio in the range of 1:3 to 3:1.

12. The process according to one of the claims 8 to 11, **characterized in that** a mixture of magnesium sulfate, di-ammonium hydrogen phosphate and the further inorganic material is ground.

13. The process according to one of the claims 8 to 12, **characterized in that** Epsom salt is used as a hydrate of the magnesium sulfate.

14. Use of a solid particle composition according to anyone of the claims 1 to 7 as flame-retardant, in particular in insulating materials on the basis of organic fiber materials, especially in insulating materials of scrap-paper, wood fiber or sheep's wool.

15. Insulating material on the basis of organic fiber materials including a solid particle composition according to anyone of the claims 1 to 7, preferably in a quantity of 5 to 20 wt. %, based on the insulating material.

## Revendications

1. Composition particulaire solide, contenant 40 à 80 % en poids d'un composé de formule I
[(NH₄)₂Mg(HPO₄)₂ • m H₂O] (I)
ou d'un mélange du composé de formule (I) avec un composé de formule II
[(NH₄)₂Mg(SO₄)₂ • n H₂O] (II)
dans lesquelles m se situe dans la plage allant de 3 à 5 et n dans la plage allant de 5 à 7,
ainsi que 20 à 60 % en poids d'un hydrate de sulfate de magnésium, à chaque fois par rapport au poids total de la composition,
pouvant être obtenue par mise en réaction d'au moins un hydrate de sulfate de magnésium avec de l'hydrogénophosphate de diammonium ((NH₄)₂HPO₄) et avec un autre matériau inorganique, qui est choisi parmi le chlorure de calcium anhydre et le sulfate de magnésium anhydre et leurs mélanges, la mise en réaction comprenant la réunion et le mélange intime des composants mentionnés.

2. Composition particulaire solide selon la revendication 1, dans laquelle l'autre matériau inorganique est le sulfate de magnésium anhydre.

3. Composition particulaire solide selon la revendication 1 ou 2, contenant un composé de formule I
[(NH₄)₂Mg(HPO₄)₂ • m H₂O] (I)
ou un mélange du composé de formule (I) avec un composé de formule II
[(NH₄)₂Mg(SO₄)₂ • n H₂O] (II)
dans lesquelles m signifie 4 et n signifie 6.

4. Composition particulaire solide selon l'une quelconque des revendications précédentes, dans laquelle l'hydrate du sulfate de magnésium contient 1 à 10 moles d'H₂O par mole de MgSO₄.

5. Composition particulaire solide selon l'une quelconque des revendications précédentes, dans laquelle le rapport molaire entre le phosphore et le soufre se situe dans la plage allant de 1,5:1 à 1:4 et notamment dans la plage allant de 1:1 à 1:3.

6. Composition particulaire solide selon l'une quelconque des revendications précédentes, qui présente une teneur en eau de 10 à 40 % en poids, par rapport au poids total de la composition.

7. Composition particulaire solide selon l'une quelconque des revendications précédentes, qui présente une teneur en phosphore, calculée en tant que phosphate, de 15 à 30 % en poids, par rapport au poids total de la composition.

8. Procédé de fabrication d'une composition particulaire solide selon l'une quelconque des revendications précédentes, **caractérisé en ce qu'**au moins un hydrate de sulfate de magnésium est mis en réaction avec de l'hydrogénophosphate de diammonium ((NH₄)₂HPO₄), conjointement avec un autre matériau inorganique, qui est choisi parmi le chlorure de calcium anhydre et le sulfate de magnésium anhydre et leurs mélanges, la mise en réaction comprenant la réunion et le mélange intime des composants mentionnés.

9. Procédé selon la revendication 8, **caractérisé en ce que** le matériau inorganique supplémentaire est le sulfate de magnésium anhydre.

10. Procédé selon la revendication 9, **caractérisé en ce que** l'hydrate du sulfate de magnésium, le sulfate de magnésium anhydre et l'hydrogénophosphate de diammonium ((NH₄)₂HPO₄) sont utilisés en un rapport tel que le rapport molaire entre le phosphore et le soufre se situe dans la plage allant de 1,5:1 à 1:4 et notamment dans la plage allant de 1:1 à 1:3.

11. Procédé selon la revendication 9 ou 10, **caractérisé en ce que** l'hydrate de sulfate de magnésium et le sulfate de magnésium anhydre sont utilisés en un rapport molaire dans la plage allant de 1:3 à 3:1.

12. Procédé selon l'une quelconque des revendications 8 à 11, **caractérisé en ce qu'**un mélange de sulfate de magnésium, d'hydrogénophosphate de diammonium et de l'autre matériau inorganique est broyé.

13. Procédé selon l'une quelconque des revendications 8 à 12, **caractérisé en ce que** le sel d'Epsom est utilisé en tant qu'hydrate de sulfate de magnésium.

14. Utilisation d'une composition particulaire solide selon l'une quelconque des revendications 1 à 7 en tant qu'agent ignifuge, notamment dans des matériaux isolants à base de matériaux fibreux organiques, spécialement dans des matériaux isolants à base de vieux papiers, de fibres de bois ou de laine de mouton.

15. Matériau isolant à base de matériaux fibreux organiques, contenant une composition particulaire solide selon l'une quelconque des revendications 1 à 7, de préférence en une quantité de 5 à 20 % en poids, par rapport au matériau isolant.
